# EUROPEAN PATENT APPLICATION

(11) **EP 4 625 193 A1**
(43) Date of publication of application: **01.10.2025**
(21) Application number: 25159724.1
(22) Date of filing: 24.02.2025
(51) Int. Cl.: G06F 13/36, G06F 13/42

(54) **CONFIGURABLE DIE-TO-DIE INTERFACES**

(30) Priority: 29.03.2024 US 202463571986 P; 24.06.2024 US 202418752088
(71) Applicant: Intel Corporation, Santa Clara, CA 95054 (US)
(72) Inventor: DAHIYA, Somvir Singh, Portland, 97229 (US); WHITESIDE, Clint, Hillsboro, 91724 (US); RAGLAND, Daniel J., Sherwood, 97140 (US)
(74) Representative: HGF

(57) **Abstract**

In some embodiments, provided are techniques to allow a user to adjust the upper limits of die-to-die link clock settings.

## Description

### CROSS-REFERENCE TO RELATED APPLICATIONS

This application claims the benefit of U.S. Provisional Application No 63/571,986, filed on March 29, 2024, and the benefit of U.S. Non-Provisional Application No 18/752,088, filed on June 24, 2024.

### TECHNICAL FIELD

Embodiments of the invention relate to the field of integrated circuit devices; and more specifically, to the field of interconnect performance management.

### BRIEF DESCRIPTION OF THE DRAWINGS

The disclosure may best be understood by referring to the following description and accompanying drawings that are used to illustrate embodiments of the invention. In the drawings:
Fig. 1 is a block diagram of a processor system in accordance with some embodiments.
Fig. 2 is a block diagram showing a processor system having configurable maximum voltage limits in accordance with some embodiments.
Fig. 3 is a diagram showing a processor system illustrating D2D interfaces between various chiplets in a package in accordance with some embodiments.
Fig. 4 is a diagram illustrating voltage/frequency override curves in accordance with some embodiments.
Fig. 5 is a flow diagram showing a D2D Overclocking control process in accordance with some embodiments.
Fig. 6 is a diagram showing a computing system with over-clockable D2D links in accordance with some embodiments.

### DETAILED DESCRIPTION

With multi-die packages (MDP) using die-to-die (D2D) interconnects such as Universal Chip Interconnect Express (UCIe) and other technologies, interface bandwidth has become important to performance. These D2D interfaces can operate at different frequencies and increasing frequency can improve performance by removing performance bottlenecks.

In some embodiments, users (OEMs, BIOS developers, and/or end-users) can increase D2D interface frequencies beyond product defaults. This creates an opportunity for overclocking and performance optimization on chips and MCPs that have extra margin available.

In some embodiments, parameter interfaces may be provided to be able to externally interrupt the normally internal selected D2D speed. In some embodiments, they may provide a processor system interface for beyond specification D2D frequency requests (e.g., through a mailbox register) and/or a user interfacing option including a basic input output system (BIOS) option to initiate requests. Power management code, running on a system management controller (SMC) can then initiate a replaced (e.g., higher) D2D frequency that is aligned with the BIOS and/or user requests.

In some embodiments, these approaches can extract additional performance headroom, particularly for scenarios where the D2D links are exercised when there is heavy traffic between processor system dies.

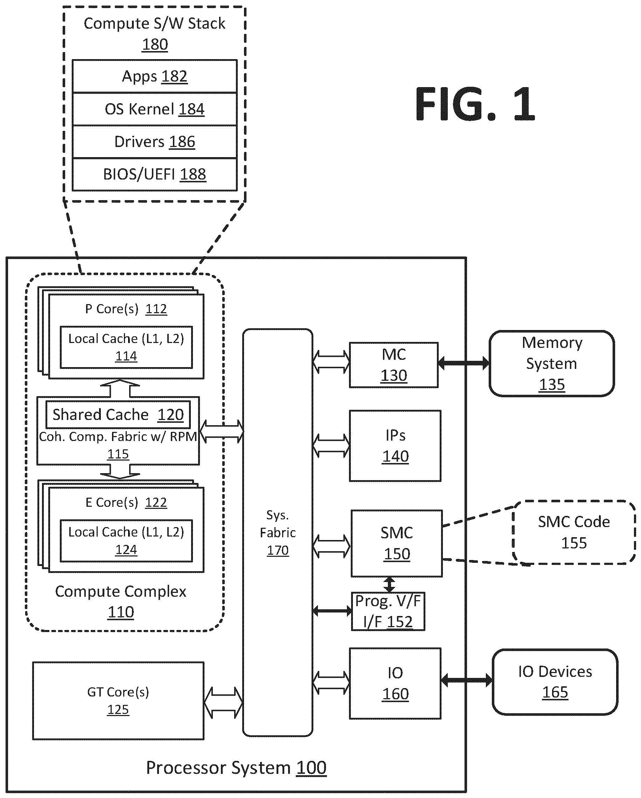

Fig. 1 is a block diagram of a processor system 100 in accordance with some embodiments. The processor system (or simply processor) 100 generally includes a compute complex 110, graphics technology (GT) core(s) 125, memory controller 130 with associated system memory 135, IP blocks 140, system management controller (SMC) 150 with associated V/F interface 152, and IO controller(s) 160 with associated IO devices 165, all coupled together as shown through system interconnect fabric 170. The system fabric 170 may be implemented with one or more busses, rings, point-to-point connections, and/or mesh networks, depending upon particular design configurations and objectives.

Note that IP stands for intellectual property and is typically used to indicate a re-usable block of functional circuitry for performing one or more functions. As used herein, the terms IP, IP block, or functional block may be used interchangeably, not only to refer to re-useable functional circuit blocks, whether self-designed or acquired from a third-party, but also, to product specific circuit blocks. Examples of functional, or IP, blocks include but are not limited to display engines, video processing units, image processing units, digital signal processing units, universal serial bus controllers, memory controllers, crypto encoders/decoders, processing cores, and the like.

The compute complex 110 generally includes compute processors (sometimes referred to as CPU cores) and may include one or more types of processors, including P (high-performance) cores 112 and/or E (energy-efficiency) cores 122. Multiple compute processors may be coupled together through coherent compute fabric 115. In the depicted embodiment, both the P and E cores include L1 and L2 cache, 114, 124, respectively, although the P core caches may be larger and/or configured differently to accommodate the particular demands of the P cores. For example, in some embodiments, the E cores 122 may be clustered together and share none, part or all of their L2 cache with each other, e.g., through a separate E cache fabric (not shown).

Both the P and E compute cores 112, 122 process software from software stack 180, which includes applications 182, operating system (OS) kernel modules 184, drivers 186, and BIOS (Basic Input/Output System)/UEFI (Unified Extensible Firmware Interface) boot code 188. The drivers allow the apps 182 and OS components 184 to monitor and/or control the hardware, or circuitry, within processor system 100. Among other things, the OS 184 and drivers 186 may work together with the SMC 150 to manage power and performance (PnP) for the various blocks within processor system 100.

The BIOS/UEFI 188 is used by the processor system for booting and also for configuring settings for the various circuit blocks. Most modern computing systems use a UEFI for these purposes, although some still use a traditional BIOS. Regardless, it is still common to refer to either as BIOS and thus, for simplicity, the term "BIOS" will be broadly used in this description, but it should be appreciated that as used herein, the term BIOS also refers to UEFI or alternative boot software/ firmware. Among other things, the BIOS may be used to program over-clocking parameters such as D2D frequency settings, discussed further below.

The P and E cores are different from each other with regard to their design bias toward performance or efficiency. In the depicted embodiment, for simplicity, two compute core types, P and E, are shown. P cores are generally designed with a bias toward higher performance capability at the expense of higher power consumption, while E cores are biased toward more efficient operation, consuming less power but with less performance potential. It should be appreciated that even though only two compute core types have been shown, there may be additional compute core types, or classes, within the compute complex 110, having different degrees or kinds of performance and processing efficiency capabilities. For example, higher performance capabilities may derive from having more robust instruction sets, e.g., from having additional instruction types such as floating point or advanced vector instructions and/or from having larger execution unit arrays such as with multiple instances of equivalent instructions.

The different performance capabilities of a core may be due to a core's architecture and size, but it also may be due to the way that the core is connected to the rest of the processor. For example, there may be uniform cores, but some may be on a separate power island that makes them more energy efficient. Also, identical cores on a remote chiplet may be the same type as those on a closer die but due to the relative differences in distance, may be lower in performance and less efficient.

In some embodiments, having different P and E core types may be referred to as a hybrid processing system implementation. Note that in many implementations, the different P/E type compute cores, while having different power/performance profiles, will typically have a common set architecture (ISA). In other embodiments, one or some of the different P/E core types may utilize different ISAs relative to the other P/E compute core types. (Note that while the terms "P/E" are used to delineate between higher and lower compute cores based on their processing performance and efficiency capabilities, it should be appreciated that other terms may be used such as "big/little," "gold/silver", and the like.

The SMC (system management controller) 150 includes one or more microcontrollers, state machines and/or other logic circuits for controlling various aspects of the processor system 100. For example, it may manage functions such as security, boot configuration, and power and performance including utilized and allocated power along with thermal management. The SMC may also be referred to as a P-unit, a power management unit (PMU), a power control unit (PCU), a system management unit (SMU) and the like and may include multiple SMCs, PMUs, die management controllers, etc., distributed, e.g., hierarchically, across multiple dies and/or die packages within the processor system 100. The SMC executes SMC code 155, which may include multiple separate software and/or firmware modules (sometimes referred to as P-code, Q-code, D-code, and/or A-code) to perform these and other functions. In some embodiments, it may perform routines, discussed further below, to determine, or assist in determining, configurable voltage and/or frequencysettings for D2D links and other IP operating points.

Note that it should be appreciated that the processor system 100 may be implemented in various different manners. For example, it may be implemented on a single die, multiple dies (dielets, chiplets), one or more dies in a common package, or one or more dies in multiple packages. Along these lines, some of the depicted blocks may be located separately on different dies or together on two or more different dies.

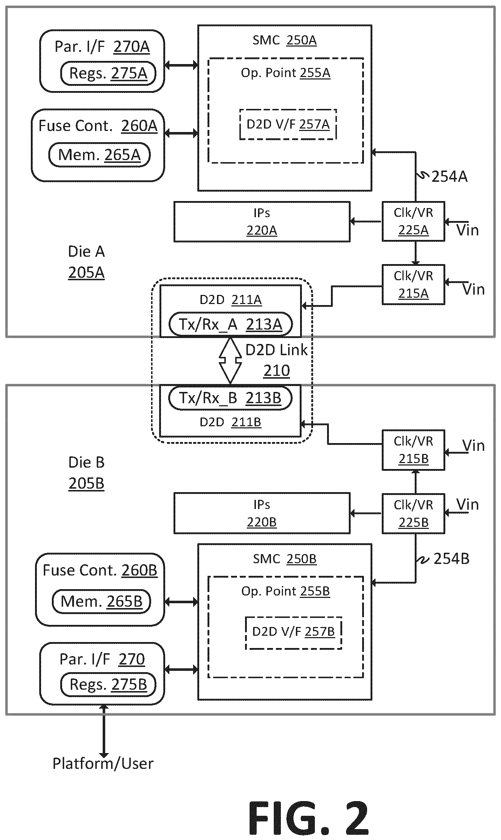

Fig. 2 is a block diagram showing a processor system having configurable D2D frequencies in accordance with some embodiments. Fig. 2 shows a system with first and second dies, Die A (205A) and Die B (205B), coupled together through a D2D link (or interconnect) 210.

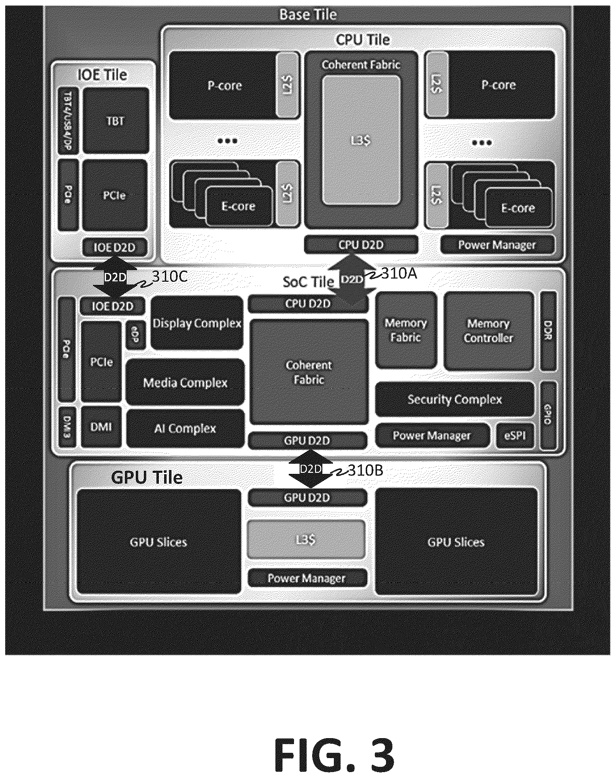

For simplicity, only two dies, e.g., a higher performance compute die and an SoC die, are shown to illustrate a user-adjustable D2D link in accordance with some embodiments. However, it should be appreciated that the concepts may be scaled to a higher number of chiplets in one or more packages and may also be employed for many different die functions including but not limited to IO, memory, compute, graphics, etc. For example, Fig. 3 is a block diagram showing a multi-chip processor system with a plurality of different D2D links coupling together different pairs of tiles (dies, chiplets) within the system. In this example, shown are a D2D link 310A between a CPU and a SoC tile, a D2D link 310B between the SoC tile and a GPU tile; and a D2D link 310C between an IO tile and the SoC tile. It also provides an illustration of the subsystems within a SoC tile (die) that can benefit from the bandwidth increase afforded by the higher D2D frequencies. It is to be noted that D2D links may be different than traditional memory interconnects and may be controlled independently of fabric overclocking or memory overclocking for example. In general, one or more D2D links, uni-directional and/or bidirectional, can exist between any two dies in a package.

Returning back to Fig. 2, each die 205 includes a programable D2D interface circuit 211 (211A, 211B) and several different IP domain circuit blocks 220 (220A, 220B). Each of the D2D and IP block circuits are powered and clocked from associated clock and voltage regulator (VR) circuits from blocks 215, 225, respectively. In turn, these VRs may be powered from voltage regulators such as off-chip regulators (Vin) to provide regulated voltage supplies to the VRs within the V/F circuit blocks. The VRs within the Clk/VR circuits 215, 225 may be implemented with any suitable voltage regulator circuits such as buck type, digital linear, low drop-out (LDO), and/or any other voltage regulator circuitry to provide reliable and responsive voltage supplies that can meet voltage and power specifications as defined for a user. Similarly, the clock generation circuits within the Clk/VR blocks may comprise phase-locked loop, delay locked loop, clock-tree, clock divider/multiplier and/or any other suitable circuits for providing clocks with sufficient frequencies to their associated clock circuit loads.

The D2D interconnect (or link) 210 includes banks of Tx and Rx circuits on each side of the link, e.g., Tx/Rx A (213A) on Die A and Tx/Rx B (213B) on Die B. In some embodiments, they form banks of single-ended links out of coupled together transmitters (Tx) from one die and receivers (Rx) from the other die. The interface circuits 211 may also include forwarded clock generator circuits to generate forwarded clocks from transmitter sides of the links. Thus, the D2D interface circuits 211 and/or Tx/Rx circuits 213, along with the Clk/VR circuits 215, may include adjustable VRs and phase locked loop (PLL) with adjustable clock generation circuitry (ref. clocks, dividers, multipliers, buffers, etc.) for running the links at their extreme upper limits, which may vary from chip to chip depending on process fabrication and other variations.

In the depicted embodiment, the dies also each include a system management controller 250 coupled to the Clk/VR circuits 215, 225 to control voltage and frequency operating points for their respective D2D link and IP circuit blocks 211, 220, e.g., in accordance with associated V/F curves or set frequencies. Also included in the dies are fuse controller circuits 260 and parameter (e.g., V/F) interface (I/F) circuits 270 coupled to the SMCs 250. (Note that for convenience, as well as for ease of explanation, the description of the V/F and SMC circuitry may be in the singular but depending on context, may pertain to components in one or both of the dies. Along these lines, while both dies are shown with an SMC, along with associated V/F related circuit blocks, it should be appreciated that in some embodiments, only one die within a link may have an SMC with supporting circuitry. Alternatively, they each may have separate forms of an SMC, e.g., with one SMC acting as a supervising controller, setting operating points for both sides of a link and conveying commands and control parameters to the other die. Likewise, in some embodiments, the dies may include separate dedicated links used, e.g., specifically for control and coordination between the two dies.

The fuse controller circuit(s) 260 read fused parameters that may be programmed into the system. These parameters, among other things, may include measured voltage limits, as well as required voltage levels for associated frequencies for the various V/F domains, along with ranges and/or upper default limits (voltages and/or frequencies) for operating the D2D interconnects. The programmed data may be stored using traditional fuse circuits or with any other suitable storage circuit structures. The fuse controller(s) 260 have memory such as SRAM or flash memory 265 to store loaded parameters for SMC control operations among other things. In some embodiments, this memory may be updated with D2D frequency values based on entries made into the parameter interface(s) 270 in order to operate the D2D links at the user-adjusted (e.g., higher) frequencies. As discussed below, these updates may be made either dynamically by a user through an SMC accessible user interface or through a BIOS settings update through a rest.

The parameter interface(s) 270 facilitates communications to the SMC(s) from the operating system (OS) domain, e.g., through a BIOS reset or through an external interface from outside of the processor system. The parameter interface may implement BIOS setting adjustments, dynamic OS-based writes via a mailbox register transaction, MMIO (memory management input/output) writes, and/or the like. To implement such interface access, it may include one or more registers 275 such as BIOS, overclock ((OC), or other registers, for example, that may be implemented as so-called model specific registers (MSRs) or other registers used to set operational parameters. Through the parameters interface 270, users such as end users or OEMs may enable D2D over-clocking, not constrained modes, set maximum voltage (Vmax) limits, e.g., for one or more V/F domain circuit blocks, and/or edit V/F operating point curves for some or all of the domain circuit blocks.

The SMC(s) 250 has an operating point module 255 to control the V/F operating points for some or all of the various domain circuit blocks 211, 220. The module may be implemented with logic such as circuits and/or code such as firmware and may include components that are part of a common V/F management engine or separate power management modules for the various domain blocks. An SMC may have other parameters related to overclocking and for providing different levels of access depending on the user. The operating point module may use this information in setting the various V/F control points for the domain blocks 211, 220 through the Clk/VR circuits 215, 225. It may also apply user adjusted V/F curves, either defined directly by a user or through, for example, SMC supported interpolation of predefined curves based on parameters provided by a user.

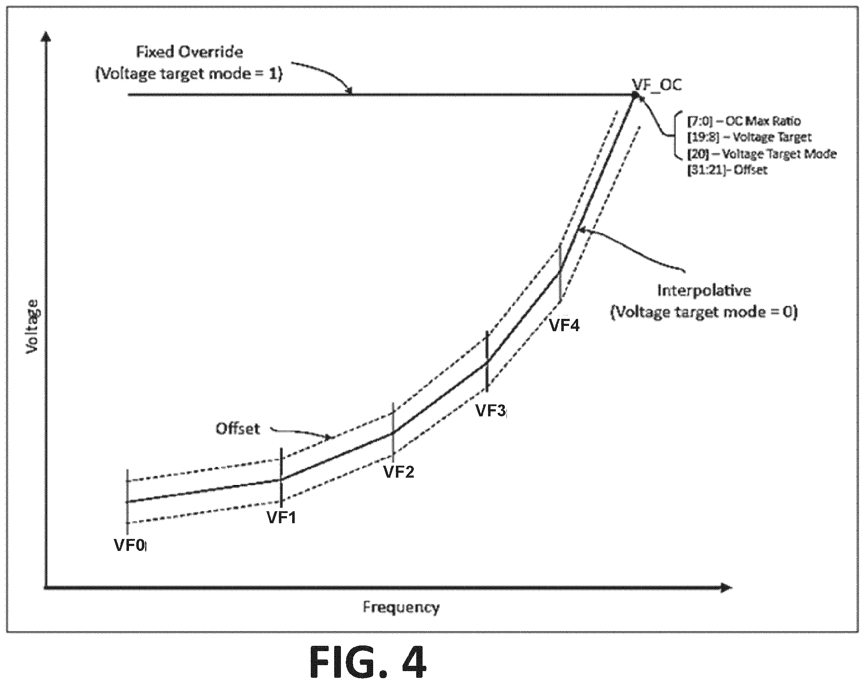

Fig. 4 is a diagram showing D2D V/F adjustment in accordance with some embodiments. With this example, the user has the option of changing the frequency and voltage for the D2D interface at run time, e.g., by way of an SMC interruptible mailbox command through the parameter interface 270, without requiring a reset. With such a dynamic voltage and frequency adjustment method, a user may, for example, override a default D2D maximum ratio, maximum voltage, and/or voltages for various intermediate frequency points between minimum frequency and maximum frequency limits. Alternatively, a user could request a target frequency directly.

With the depicted embodiment of Fig. 4, a user is able to set an override mode, along with specific V/F parameters through a 32-bit command word. The depicted V/F curve defines collections of VF pairs depending on the requested mode and voltage settings. In some embodiments, a user can set a mode to adjust the voltages directly, with an applied offset, and/or using an interpolative mode with maximum V/F values that may be applied for either mode.

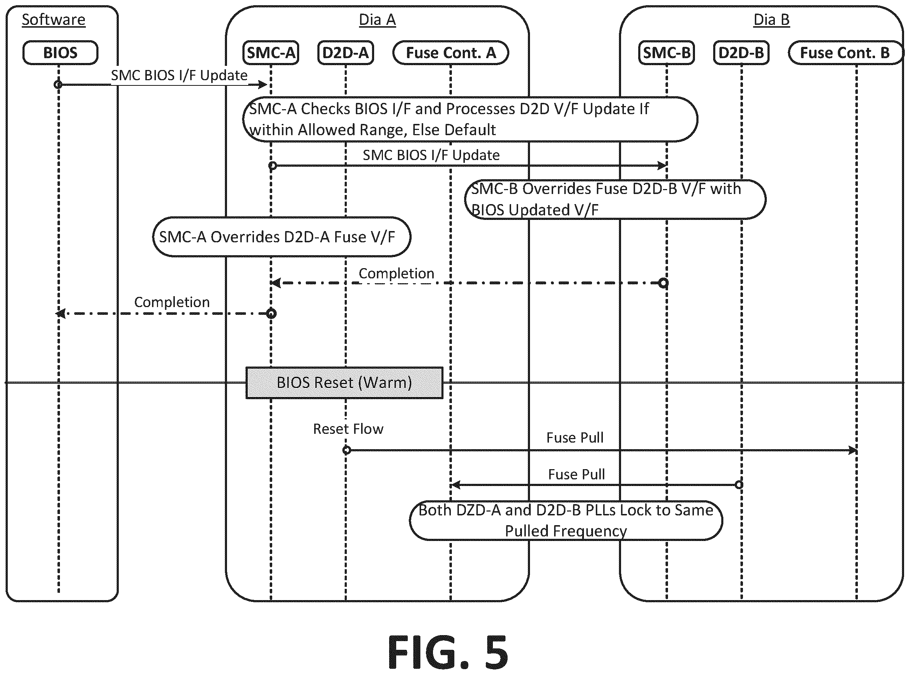

Fig. 5 is a flow diagram showing a process for changing D2D over-clocking parameters through a BIOS reset operation in accordance with some embodiments. The parameter interface(s) 270 may include a BIOS to SMC interface to provide external accessibility for controlling D2D link parameters through a BIOS settings update operation. As shown in Fig. 5, the SMC (SMC-A) may detect a D2D operation point setting change made by the BIOS. If the change is within allowable limits, it may then communicate the settings change to the other die's system controller (SMC-B), which along with SMC-A, changes the settings (e.g., max V/F limits or adds an offset) for both the D2D-A and D2D-B interface circuits. Upon BIOS reset (e.g., warm reset), the D2D interfaces for the link then both come up operating in accordance with the new settings.

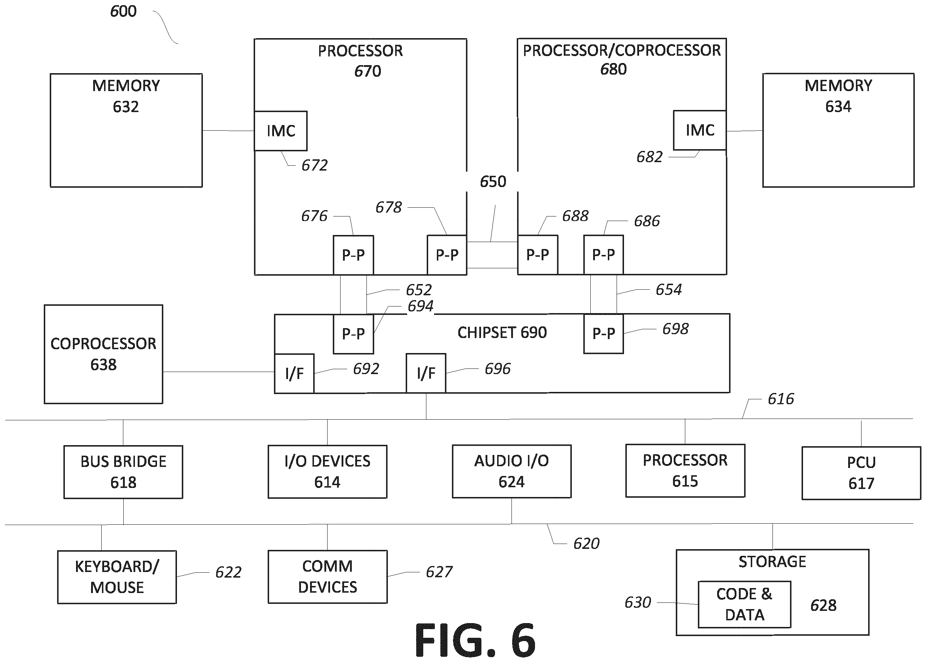

Fig. 6 is a diagram showing a computing system with over-clockable D2D links in accordance with some embodiments. Multiprocessor system 600 is an interfaced system and includes a plurality of processors including a first processor 670 and a second processor 680 coupled via an interface 650 such as a point-to-point (P-P) D2D interconnect that is in accordance with embodiments discussed herein. In some examples, the first processor 670 and the second processor 680 are homogeneous. In some examples, first processor 670 and the second processor 680 are heterogenous. Though the example system 600 is shown to have two processors, the system may have three or more processors, or may be a single processor system. In some examples, the computing system is implemented, wholly or partially, with a multi-chip (or multi-chiplet) module, in the same or in different package combinations.

Processors 670 and 680 are shown including integrated memory controller (IMC) circuitry 672 and 682, respectively. Processor 670 also includes interface circuits 676 and 678, along with core sets. Similarly, second processor 680 includes interface circuits 686 and 688, along with a core set as well. A core set generally refers to one or more compute cores that may or may not be grouped into different clusters, hierarchal groups, or groups of common core types. Cores may be configured differently for performing different functions and/or instructions at different performance and/or power levels. The processors may also include other blocks such as memory and other processing unit engines.

Processors 670, 680 may exchange information via the interface 650 using interface circuits 678, 688. IMCs 672 and 682 couple the processors 670, 680 to respective memories, namely a memory 632 and a memory 634, which may be portions of main memory locally attached to the respective processors.

Processors 670, 680 may each exchange information with a network interface (NW I/F) 690 via individual interfaces 652, 654 using interface circuits 676, 694, 686, 698. The network interface 690 (e.g., one or more of an interconnect, bus, and/or fabric, and in some examples is a chipset) may optionally exchange information with a coprocessor 638 via an interface circuit 692. In some examples, the coprocessor 638 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 670, 680 or outside of both processors, yet connected with the processors via an interface such as P-P interconnect, such that either or both processors' local cache information may be stored in the shared cache if a processor is placed into a low power mode.

Network interface 690 may be coupled to a first interface 616 via interface circuit 696. In some examples, first interface 616 may be an interface such as a Peripheral Component Interconnect (PCI) interconnect, a PCI Express interconnect, or another I/O interconnect. In some examples, first interface 616 is coupled to a power control unit (PCU) 617, which may include circuitry, software, and/or firmware to perform power management operations with regard to the processors 670, 680 and/or co-processor 638. PCU 617 provides control information to one or more voltage regulators (not shown) to cause the voltage regulator(s) to generate the appropriate regulated voltage(s). PCU 617 also provides control information to control the operating voltage generated. In various examples, PCU 617 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software). In some embodiments, the PCU may correspond to, or at least have over-lapping functionality with, an SMC as discussed herein.

PCU 617 is illustrated as being present as logic separate from the processor 670 and/or processor 680. In other cases, PCU 617 may execute on a given one or more of cores (not shown) of processor 670 or 680. In some cases, PCU 617 may be implemented as a microcontroller (dedicated or general-purpose) or other control logic configured to execute its own dedicated power management code, sometimes referred to as P-code. In yet other examples, power management operations to be performed by PCU 617 may be implemented externally to a processor, such as by way of a separate power management integrated circuit (PMIC) or another component external to the processor. In yet other examples, power management operations to be performed by PCU 617 may be implemented within BIOS or other system software. Along these lines, power management may be performed in concert with other power control units implemented autonomously or semi-autonomously, e.g., as controllers or executing software in cores, clusters, IP blocks and/or in other parts of the overall system.

Various I/O devices 614 may be coupled to first interface 616, along with a bus bridge 618 which couples first interface 616 to a second interface 620. In some examples, one or more additional processor(s) 615, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 616. In some examples, second interface 620 may be a low pin count (LPC) interface. Various devices may be coupled to second interface 620 including, for example, a keyboard and/or mouse 622, communication devices 627 and storage circuitry 628. Storage circuitry 628 may be one or more non-transitory machine-readable storage media as described below, such as a disk drive or other mass storage device which may include instructions/code and data 630 and may implement the storage in some examples. Further, an audio I/O 624 may be coupled to second interface 620. Note that other architectures than the point-to-point architecture described above are possible. For example, instead of the point-to-point architecture, a system such as multiprocessor system 600 may implement a multi-drop interface or other such architecture.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

Illustrative examples of the technologies disclosed herein are provided below. An embodiment of the technologies may include any one or more, and any compatible combination of, the examples described below.

Example 1 is an apparatus that includes a D2D interface, a controller circuit, and a parameter interface circuit. The D2D interface is on a first die and is to be coupled to a counterpart D2D interface on a second die. The D2D interface on the first die is to be clocked at an operating point that can be up to an upper limit that is at a first level. The controller circuit is to control the operating point. The parameter interface circuit is coupled to the controller circuit to receive a setting to adjust the upper limit to a second level that is higher than the first level.

Example 2 includes the subject matter of example 1, and wherein the parameter interface includes one or more registers to implement a mailbox interface to adjust the upper limit.

Example 3 includes the subject matter of any of examples 1-2, and wherein at least one of the one or more registers is updateable by a basic input output system (BIOS) to adjust the upper limit to the second level.

Example 4 includes the subject matter of any of examples 1-3, and wherein the parameter interface is dynamically accessible by an external user to adjust the upper limit through a user interface.

Example 5 includes the subject matter of any of examples 1-4, and wherein the D2D interface on the first die and counterpart interface on the second die when coupled together form a link having single-ended channels.

Example 6 includes the subject matter of any of examples 1-5, and further comprising a fuse controller circuit to define the first upper limit level.

Example 7 includes the subject matter of any of examples 1-6, and wherein the setting includes a mode setting to define a first or second over-clocking mode.

Example 8 includes the subject matter of any of examples 1-7, and wherein the first mode is an offset mode to add an offset to the operating point.

Example 9 includes the subject matter of any of examples 1-8, and wherein the setting includes a frequency ratio setting to increase the upper limit of the operating point.

Example 10 includes the subject matter of any of examples 1-9, and wherein the setting includes a maximum voltage setting.

Example 11 is a processor system having a first die in accordance with the subject matter of any of examples 1-10.

Example 12 includes the subject matter of example 11, and wherein the first die is a compute processor and the second die is an artificial intelligence (AI) processor.

Example 13 is an apparatus that includes first and second dies, a controller circuit, and a parameter interface circuit. The first die has a first die-to-die (D2D) interface including a plurality of first transmitter circuits to be clocked at a clock frequency with an upper limit at a first level. The second die has a second D2D interface including a plurality of first receiver circuits to be coupled with the first transmitter circuits to form a D2D link between the first and second dies. The controller circuit is to control the clock frequency. The parameter interface circuit is coupled to the controller circuit to receive a setting to adjust the upper limit to a second level that is higher than the first level.

Example 14 includes the subject matter of example 13, and wherein the parameter interface includes one or more registers to implement a mailbox interface to adjust the upper limit.

Example 15 includes the subject matter of any of examples 13-14, and wherein at least one of the one or more registers is updateable by an executing basic input output system (BIOS) to adjust the upper limit to the second level.

Example 16 includes the subject matter of any of examples 13-154, and wherein the parameter interface is dynamically accessible by an external user to adjust the upper limit through a user interface.

Example 17 includes the subject matter of any of examples 13-16, and wherein the D2D link is a single-ended link.

Example 18 includes the subject matter of any of examples 13-17, and wherein the first die has a fuse controller circuit to define the first upper limit level.

Example 19 includes the subject matter of any of examples 13-18, and wherein the setting includes a mode setting to define a first or second over-clocking mode.

Example 20 includes the subject matter of any of examples 13-19, and wherein the first mode is an offset mode to add an offset to a V/F operational point.

Example 21 includes the subject matter of any of examples 13-20, and wherein the setting includes a frequency ratio setting.

Example 22 includes the subject matter of any of examples 13-21, and wherein the setting includes a maximum voltage setting.

Example 23 is a processor system that includes first and second dies. The first die includes: (i) a plurality of first transmitter circuits to be clocked at a clock frequency up to an upper limit, (ii) a first controller circuit to control the upper limit, and (iii) a parameter interface circuit coupled to the controller circuit and being capable of receiving a setting from a user to increase the upper limit beyond a default level. The second die has a plurality of first receiver circuits coupled to the first transmitter circuits to receive data therefrom.

Example 24 includes the subject matter of example 23, and wherein the parameter interface includes a mailbox interface to receive a command from the user that includes the setting to increase the upper limit.

Example 25 includes the subject matter of any of examples 23-24, and wherein the parameter interface is accessible by a basic input output system (BIOS) to facilitate the user setting to adjust the upper limit.

Example 26 includes the subject matter of any of examples 23-25, and wherein the parameter interface is dynamically accessible by the user to adjust the upper limit through a user interface.

Example 27 includes the subject matter of any of examples 23-26, and wherein the first die has a fuse controller circuit to define the default level.

Example 28 includes the subject matter of any of examples 23-27, and wherein the setting includes a mode setting to define a first or second over-clocking mode.

Example 29 includes the subject matter of any of examples 23-28, and wherein the first mode is an offset mode to add an offset to a V/F operational point.

Example 30 includes the subject matter of any of examples 23-29, and wherein the setting includes a frequency ratio setting.

Example 31 includes the subject matter of any of examples 23-30, and wherein the setting includes a maximum voltage setting.

Example 32 includes the subject matter of any of examples 23-31, and wherein the second die includes a second controller circuit to control an operational frequency of the plurality of first receiver circuits.

Example 33 includes the subject matter of any of examples 23-32, and wherein the second controller circuit is to be supervised by the first controller circuit, which is a system management controller circuit.

Reference in the specification to "an embodiment," "one embodiment," "some embodiments," or "other embodiments" means that a particular feature, structure, or characteristic described in connection with the embodiments is included in at least some embodiments, but not necessarily all embodiments. The various appearances of "an embodiment," "one embodiment," or "some embodiments" are not necessarily all referring to the same embodiments. If the specification states a component, feature, structure, or characteristic "may," "might," or "could" be included, that particular component, feature, structure, or characteristic is not required to be included.

Throughout the specification, and in the claims, the term "connected" means a direct connection, such as electrical, mechanical, or magnetic connection between the things that are connected, without any intermediary devices.

The term "coupled" means a direct or indirect connection, such as a direct electrical, mechanical, or magnetic connection between the things that are connected or an indirect connection, through one or more passive or active intermediary devices.

The term "circuit" or "module" may refer to one or more passive and/or active components that are arranged to cooperate with one another to provide a desired function. It should be appreciated that different circuits or modules may consist of separate components, they may include both distinct and shared components, or they may consist of the same components. For example, A controller circuit may be a first circuit for performing a first function, and at the same time, it may be a second controller circuit for performing a second function, related or not related to the first function.

The meaning of "in" includes "in" and "on" unless expressly distinguished for a specific description.

The terms "substantially," "close," "approximately," "near," and "about," unless otherwise indicated, generally refer to being within +/-10% of a target value.

Unless otherwise specified, the use of the ordinal adjectives "first," "second," and "third," etc., to describe a common object, merely indicate that different instances of like objects are being referred to and are not intended to imply that the objects so described must be in a given sequence, either temporally, spatially, in ranking or in any other manner

For the purposes of the present disclosure, phrases "A and/or B" and "A or B" mean (A), (B), or (A and B). For the purposes of the present disclosure, the phrase "A, B, and/or C" means (A), (B), (C), (A and B), (A and C), (B and C), or (A, B and C).

It is pointed out that those elements of the figures having the same reference numbers (or names) as the elements of any other figure can operate or function in any manner similar to that described but are not limited to such.

For purposes of the embodiments, unless expressly described differently, the transistors in various circuits and logic blocks described herein may be implemented with any suitable transistor type such as field effect transistors (FETs) or bipolar type transistors. FET transistor types may include but are not limited to metal oxide semiconductor (MOS) type FETs such as tri-gate, FinFET, and gate all around (GAA) FET transistors, as well as tunneling FET (TFET) transistors, ferroelectric FET (FeFET) transistors, or other transistor device types such as carbon nanotubes or spintronic devices.

In addition, well-known power/ground connections to integrated circuit (IC) chips and other components may or may not be shown within the presented figures, for simplicity of illustration and discussion, and so as not to obscure the disclosure. Further, arrangements may be shown in block diagram form in order to avoid obscuring the disclosure, and also in view of the fact that specifics with respect to implementation of such block diagram arrangements are dependent upon the platform within which the present disclosure is to be implemented.

As defined herein, the term "computer readable storage medium" means a storage medium that contains or stores program code for use by or in connection with an instruction execution system, apparatus, or device. As defined herein, a "computer readable storage medium" is not a transitory, propagating signal per se. A computer readable storage medium may be, but is not limited to, an electronic storage device, a magnetic storage device, an optical storage device, an electromagnetic storage device, a semiconductor storage device, or any suitable combination of the foregoing. Memory elements, as described herein, are examples of a computer readable storage medium.

As defined herein, the term "if" means "when" or "upon" or "in response to" or "responsive to," depending upon the context. Thus, the phrase "if it is determined" or "if [a stated condition or event] is detected" may be construed to mean "upon determining" or "in response to determining" or "upon detecting [the stated condition or event]" or "in response to detecting [the stated condition or event]" or "responsive to detecting [the stated condition or event]" depending on the context. As defined herein, the term "responsive to" means responding or reacting readily to an action or event. Thus, if a second action is performed "responsive to" a first action, there is a causal relationship between an occurrence of the first action and an occurrence of the second action. The term "responsive to" indicates the causal relationship.

As defined herein, the term "processor" means at least one hardware circuit configured to carry out instructions contained in program code. The hardware circuit may be implemented with one or more integrated circuits. Examples of a processor include, but are not limited to, a central processing unit (CPU), an array processor, a vector processor, a digital signal processor (DSP), a field-programmable gate array (FPGA), a programmable logic array (PLA), an application specific integrated circuit (ASIC), programmable logic circuitry, a graphics processing unit (GPU), a controller, and so forth. It should be appreciated that a logical processor, on the other hand, is a processing abstraction associated with a core, for example when one or more SMT cores are being used such that multiple logical processors may be associated with a given core, for example, in the context of core thread assignment.

It should be appreciated that a processor or processor system may be implemented in various different manners. For example, it may be implemented on a single die, multiple dies (dielets, chiplets), one or more dies in a common package, or one or more dies in multiple packages. Along these lines, some of these blocks may be located separately on different dies or together on two or more different dies.

While the flow diagrams in the figures show a particular order of operations performed by certain embodiments of the invention, it should be understood that such order is exemplary (e.g., alternative embodiments may perform the operations in a different order, combine certain operations, overlap certain operations, etc.).

While the invention has been described in terms of several embodiments, those skilled in the art will recognize that the invention is not limited to the embodiments described, can be practiced with modification and alteration within the spirit and scope of the appended claims. The description is thus to be regarded as illustrative instead of limiting.

## Claims

1. An apparatus comprising:
a first die including a first die-to-die (D2D) interface with first transmitter circuits to be clocked at a clock frequency with an upper limit at a first level;
a second die including a second D2D interface with first receiver circuits coupled with the first transmitter circuits to form a D2D link between the first and second dies;
a first controller circuit to control the clock frequency; and
a parameter interface circuit coupled to the controller circuit to receive a setting to adjust the upper limit to a second level that is higher than the first level.

2. The apparatus of claim 1, wherein the parameter interface circuit includes one or more registers to implement a mailbox interface to adjust the upper limit.

3. The apparatus of claim 2, wherein at least one of the one or more registers is updateable by a basic input output system (BIOS) to adjust the upper limit to the second level.

4. The apparatus of any of claims 1-3, wherein the parameter interface circuit is dynamically accessible by an external user to adjust the upper limit through a user interface.

5. The apparatus of any of claims 1-4, wherein the D2D link is a single-ended link.

6. The apparatus of any of claims 1-5, wherein the first die has a fuse controller circuit to define the first upper limit level.

7. The apparatus of any of claims 1-6, wherein the setting includes a mode setting to define a first or second over-clocking mode.

8. The apparatus of claim 7, wherein the first mode is an offset mode to add an offset to a V/F operational point.

9. The apparatus of any of claims 1-8, wherein the setting includes a frequency ratio setting.

10. The apparatus of any of claims 1-9, wherein the setting includes a maximum voltage setting.

11. The apparatus of any of claims 1-10, wherein the second die includes a second controller circuit to control an operational frequency of the plurality of first receiver circuits.

12. The apparatus of any of claims 1-11, wherein the first controller circuit is a system management controller circuit.

13. A processor system including the first and second dies in accordance with any of claims 1-12.

14. The processor system of claim 13, wherein the first die is a compute processor and the second die is a graphics processor.

15. The system of claim 14, wherein the second controller circuit is supervised by the first controller circuit.
